# EUROPEAN PATENT SPECIFICATION

(11) **EP 3 915 879 B1**
(45) Date of publication and mention of the grant of the patent: **14.10.2026**
(21) Application number: 21176809.8
(22) Date of filing: 31.05.2021
(51) Int. Cl.: B64D 11/06, A47G 5/00

(54) **SEAT DIVIDER SAIL**
SITZTEILERSEGEL
VOILE SÉPARATEUR DE SIÈGE

(30) Priority: 29.05.2020 US 202063032298 P; 28.05.2021 US 202117333888
(43) Date of publication of application: 01.12.2021
(73) Proprietor: B/E Aerospace, Inc., Winston-Salem, NC 27105 (US)
(72) Inventor: PENLEY, James R., Pfafftown, NC 27040 (US); GRILLIOT, Ronald, Davie, FL 33328 (US); ZURIAN, Charles, Kernersville, NC 28274 (US); MARTINEZ, Lazaro, Clemmons, NC 27012 (US); CASTILLO, Carlos M., Medley, FL 33178 (US)
(74) Representative: Dehns

(56) References cited:
- US-A- 6 142 574
- US-A1- 2012 068 490
- US-A1- 2016 347 454
- US-A1- 2016 355 109

## Description

### PRIORITY

### BACKGROUND

In aircraft cabins, seats are disposed closely together to achieve a certain passenger density. Likewise, storage space is highly utilized by in-cabin amenities and passenger baggage storage. There are limited facilities for blocking an aircraft seat so that it cannot be used or placing a barrier between passengers to help with social distancing such as for limiting contagions. It would be desirable to have a solution for blocking aircraft seats and limiting inter-passenger exposure without damaging any seats. Furthermore, it would be desirable to have such as device that would be easily installed, movable, light weight, low cost, cleanable, and easily stowed when not in use. Furthermore, the device should not require recertification of the seat, and should meet existing flammability requirements. US 2016/347454 A1 discloses a removable seat divider for placement in a seat that includes a vertical structure configured to be placed on the seat along an approximate center of the seat. US 2012/068490 A1 and US 2016/355109 A1 are further examples of partition assemblies for vehicle.

### SUMMARY

The present disclosure provides an aircraft seat blocker as defined in claim 1.

Optional features are set out in the dependent claims.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

### BRIEF DESCRIPTION OF THE DRAWINGS

The numerous advantages of the embodiments of the inventive concepts disclosed herein may be better understood by those skilled in the art by reference to the accompanying figures in which:
FIG. 1 shows a perspective, environmental view of an example of an aircraft seat blocker / divider, not within the scope of the claims;
FIG. 2 shows a perspective, environmental view of an example of an aircraft seat blocker / divider, not within the scope of the claims;
FIG. 3 shows a perspective, environmental, detail view of an example of an aircraft seat blocker / divider, not within the scope of the claims;
FIG. 4 shows a perspective, environmental view of an example of an aircraft seat blocker / divider, not within the scope of the claims;
FIG. 5 shows a perspective, environmental view of an example of an aircraft seat blocker / divider, not within the scope of the claims;
FIG. 6 shows a perspective, environmental view of an example of an aircraft seat blocker / divider, not within the scope of the claims;
FIG. 7 shows a perspective, environmental view of an exemplary embodiment of an aircraft seat blocker / divider;
FIG. 8A shows a side view of an exemplary embodiment of an aircraft seat blocker / divider and stowage capability;
FIG. 8B shows a side view of an exemplary embodiment of an aircraft seat blocker / divider and stowage capability; and
FIG. 8C shows a side view of an exemplary embodiment of an aircraft seat blocker / divider and stowage capability.

### DETAILED DESCRIPTION

In the following detailed description of embodiments of the instant inventive concepts, numerous specific details are set forth in order to provide a more thorough understanding of the inventive concepts. Well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features.

Broadly, embodiments of the inventive concepts disclosed herein are directed to a vertical seat blocking device having a seat back connector and a seat cushion connector. The vertical seat blocking device is disposed on the center of an aircraft seat to block occupancy of the aircraft seat and establish a barrier between neighboring seats. In a further aspect, the vertical seat blocking device includes a spring element to apply a force to the fabric.

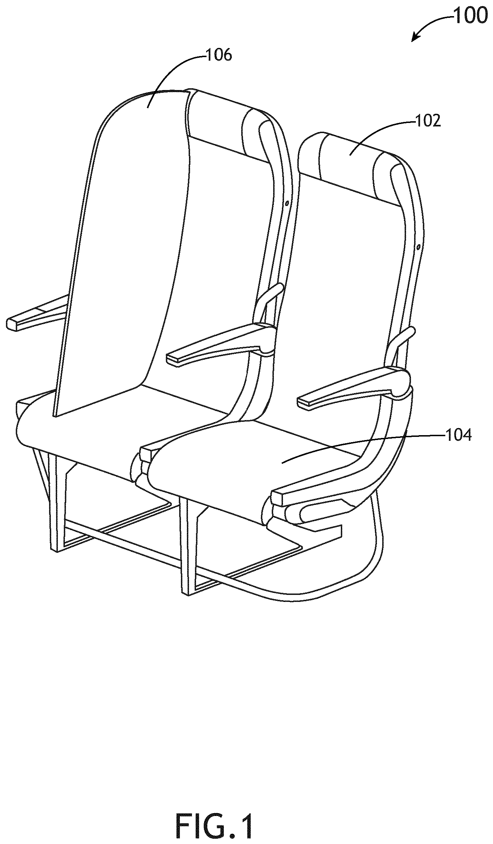

Referring to FIG. 1, a perspective, environmental view of an exemplary aircraft seat blocker / divider 106 not within the scope of the claims is shown. Aircraft seats 100 comprising a seat back 102 and a seat cushion 104 may need to be blocked from use from time to time. Furthermore, in certain circumstances, neighboring passengers may need to be positively separated by one or more aircraft seat widths. For those circumstances, an aircraft seat blocker / divider 106 **is** provided. The aircraft seat blocker / divider 106 is disposed vertically in a middle portion of an aircraft seat 100. Such disposition prevents any passenger from using the aircraft seat 100 and may provide a barrier between neighboring passengers.

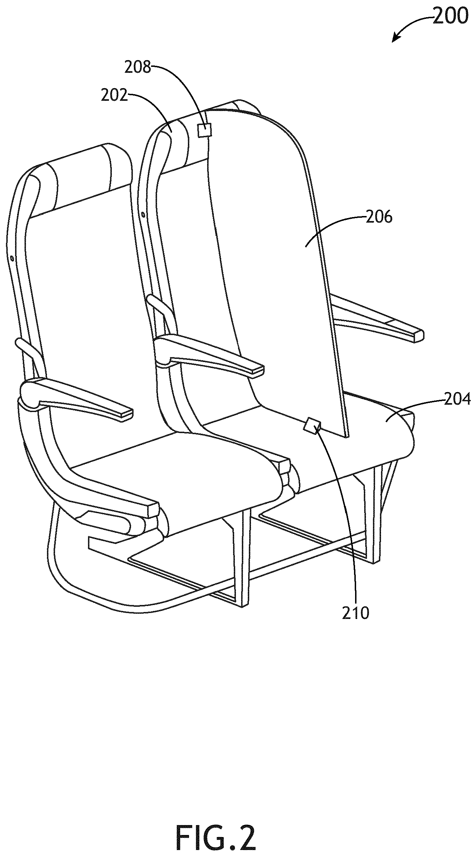

Referring to FIG. 2, a perspective, environmental view of an exemplary aircraft seat blocker / divider 206 not within the scope of the claims is shown. An aircraft seat blocker / divider 206 comprises a fabric body, a seat back attachment element 208 configured to releasably engage the seat back 202, and a seat cushion attachment element 210 configured to releasable engage the seat cushion. In at least one embodiment the seat cushion attachment element 210 comprises one or more upright retention bodies having a surface that abuts the top surface of the seat cushion and a surface that abuts the fabric body. The one or more upright bodies define an orthogonal relationship between the fabric body and the seat cushion. Likewise, the seat back attachment element 208 may comprise similar bodies to define an orthogonal relationship between the fabric body and the seat back. In at least one embodiment, each of the seat back attachment element 208 and seat cushion attachment element 210 may comprise hooks configured to surround a top surface of a headrest and an anterior surface of the seat cushion respectively. A spring element disposed in the fabric body may maintain tension in such hooks. In at least one embodiment, an elastic cord or bungie cord may attach a bottom portion of the fabric body to a portion of the aircraft seat structure below.

The aircraft seat blocker / divider 206 is disposed vertically in a middle portion of an aircraft seat 200. Such disposition prevents any passenger from using the aircraft seat 200 and may provide a barrier between neighboring passengers.

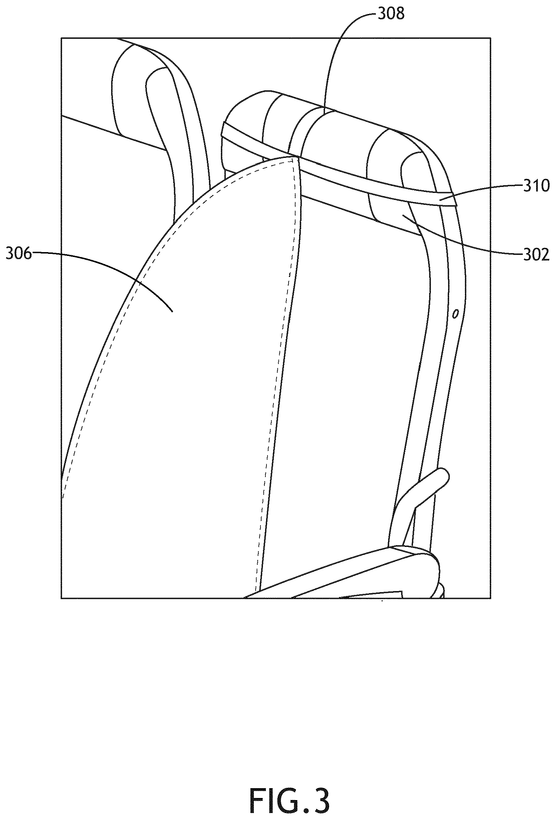

Referring to FIG. 3, a perspective, environmental, detail view of an exemplary aircraft seat blocker / divider 306 not within the scope of the claims is shown. An aircraft seat blocker / divider 306 is connected to a seat back via a midline strap 308 attached to a top portion of fabric body and configured to go over a superior surface of the headrest and a lateral strap 310 configured to surround the headrest along lateral surfaces. In at least one embodiment, the midline strap 308 may engage the lateral strap 310 along a posterior surface of the seat back.

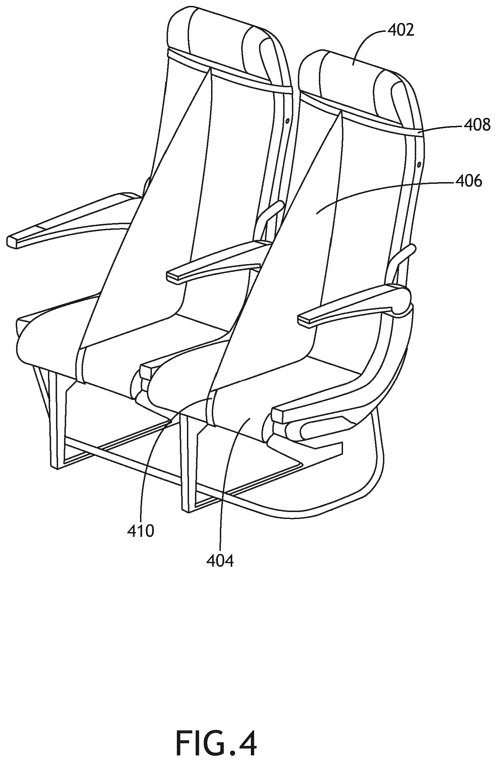

Referring to FIG. 4, a perspective, environmental view of an exemplary aircraft seat blocker / divider 406 not within the scope of the claims is shown. An aircraft seat blocker / divider 406 comprises a fabric body, a seat back attachment element 408 configured to releasably engage the seat back 402, and a seat cushion attachment element 410 configured to releasable engage the seat cushion 404. In at least one embodiment the seat cushion attachment element 410 comprises a midline strap surrounds the seat cushion 404 front-to-back such that a portion of the midline strap passes between the seat cushion 404 and the seat back 402. The midline strap maintains the fabric body in an upright orientation without internal support from a spring element.

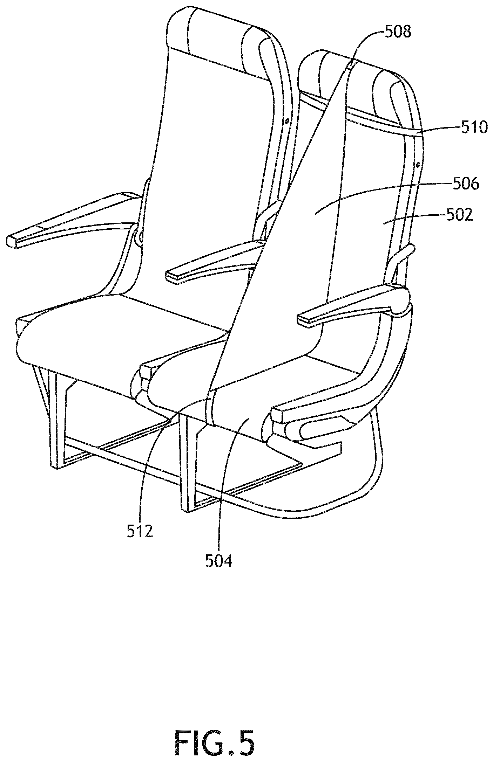

Referring to FIG. 5, a perspective, environmental view of an exemplary aircraft seat blocker / divider 506 not within the scope of the claims is shown. An aircraft seat blocker / divider 506 comprises a fabric body, seat back attachment elements 508, 510 configured to releasably engage the seat back 502, and a seat cushion attachment element 512 configured to releasable engage the seat cushion 504. In at least one embodiment the seat cushion attachment element 512 comprises a midline strap surrounds the seat cushion 504 front-to-back such that a portion of the midline strap passes between the seat cushion 504 and the seat back 502. The midline strap maintains the fabric body in an upright orientation without internal support from a spring element.

The seat back attachment elements 508, 510 comprise a midline strap 508 that passes over a superior surface of the headrest while a lateral strap 510 surrounds the headrest along lateral surfaces. The midline strap 508 and lateral strap 510 engage each other along a posterior surface of the seat back. In at least one embodiment, the midline strap 508 and lateral strap 510 define a harness that wraps around the headrest and is secured via hook-and-loop fabric.

Embodiments with a midline strap 508 along the headrest and a midline strap as the seat cushion attachment portion 512 may be releasable, temporary, and require no modification to the aircraft seat, but also be sufficiently attached to the aircraft seat as to prevent casual disengagement.

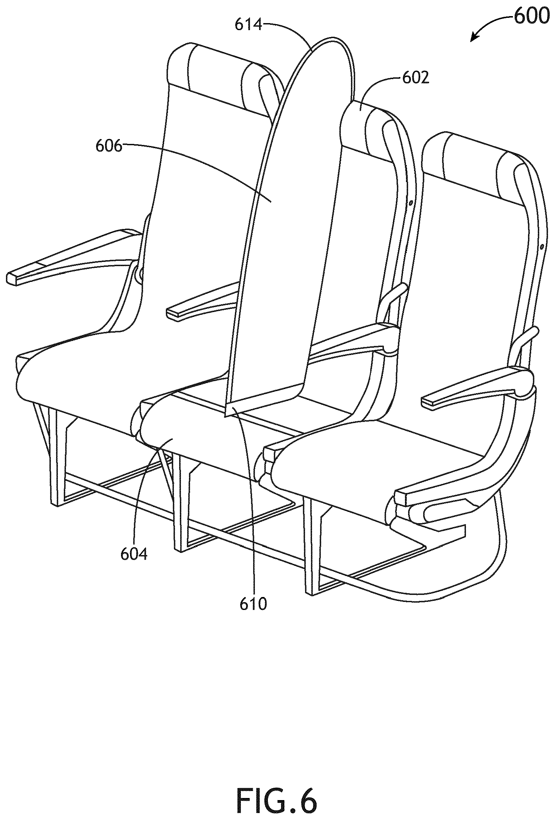

Referring to FIG. 6, a perspective, environmental view of an exemplary aircraft seat blocker / divider 606 not within the scope of the claims is shown. An aircraft seat blocker / divider 606 comprises a fabric body, a seat cushion attachment element 610 configured to releasable engage the seat cushion 604, and a spring element 614 disposed along the periphery of the fabric body to apply an expansive force to the fabric body. The expansive force maintains the form of the fabric body, potentially even when attached to the aircraft seat only by a seat cushion attachment element 610. Furthermore, the fabric body may define a headrest engagement portion that may be inserted under the headrest where appropriate for the aircraft seat 600. The spring element 614 may extend into such headrest engagement portion.

In at least one embodiment, the spring element 614 allows a top portion of the fabric body to extend up to, or above the seat back headrest such that the fabric body would form a barrier between passengers, even when a passenger's head extends above the headrest. Furthermore, the spring element 614 maintains the fabric body extending from the seat back while also being easily deformable so as to not hinder passenger egress.

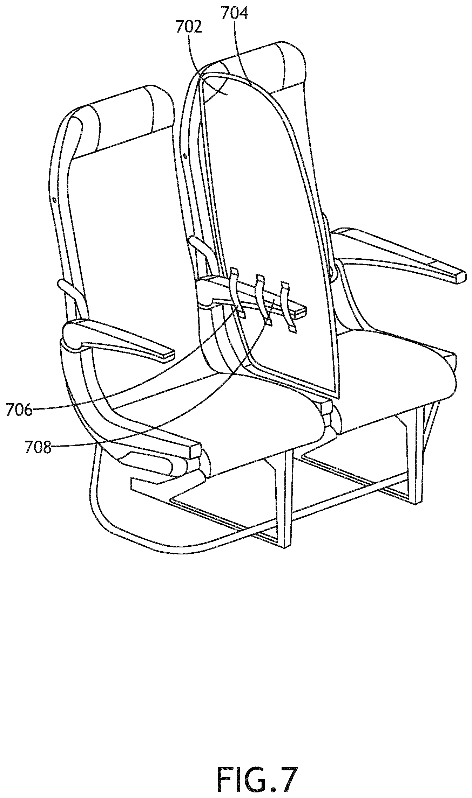

Referring to FIG. 7, a perspective, environmental view of an exemplary embodiment of an aircraft seat blocker / divider 702 is shown. An aircraft seat blocker / divider 702 comprises a fabric body, a spring element 704 disposed along the periphery of the fabric body to apply an expansive force to the fabric body, and one or more armrest engaging elements 706, each configured to surround an armrest 708 of an aircraft seat 700. When disposed between aircraft seats 700, the fabric body may or may not be able to engage neighboring seat backs and seat back cushions. To maintain the fabric body in position, and in an upright orientation, the armrest engaging elements 706 disposed on opposing surfaces of the fabric body go over neighboring armrests 708 and create a barrier between neighboring aircraft seats 700.

In at least one embodiment, a friction element may be disposed on the fabric body, configured to be placed between neighboring seat cushions. The friction element may be held in place via friction and maintain the position and orientation of the fabric body. Alternatively, the friction element may comprise a bottom portion of the fabric body.

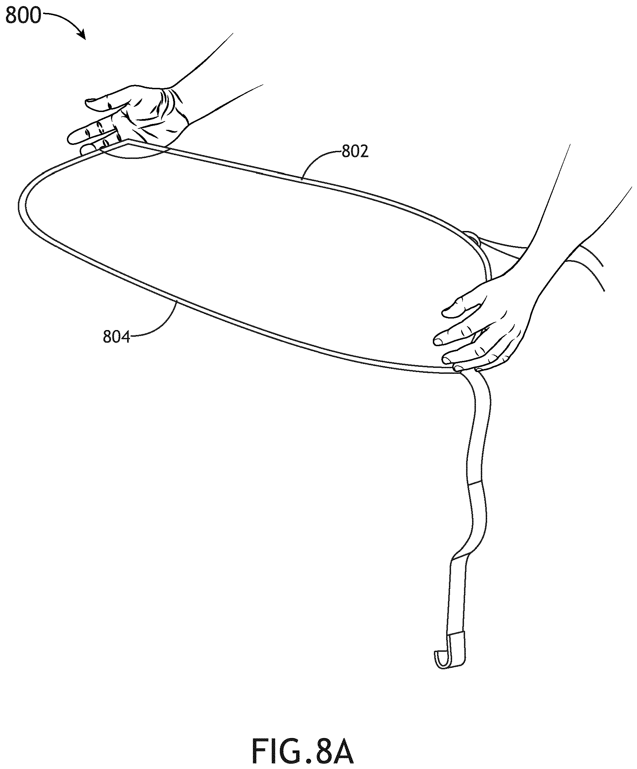

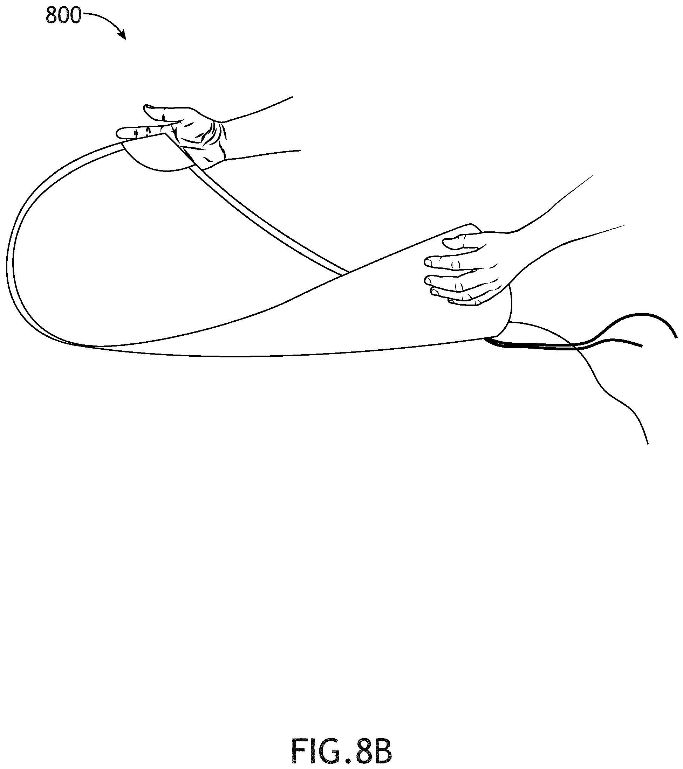

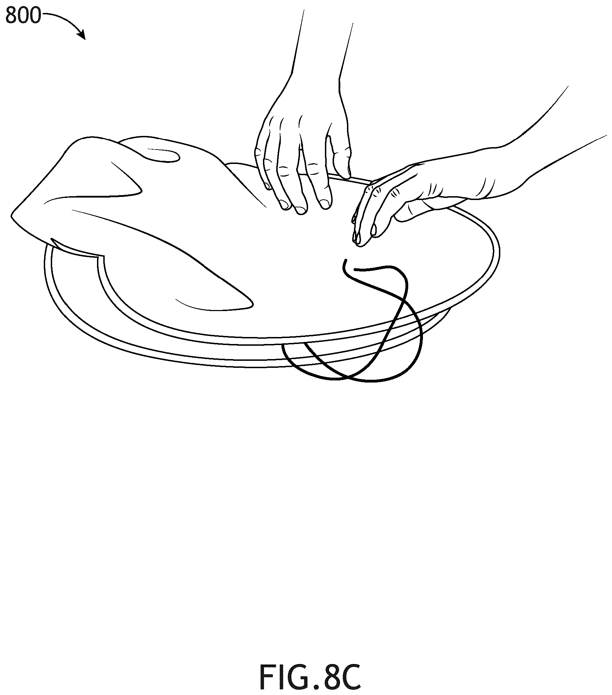

Referring to FIGS. 8A-8C, view of an aircraft seat blocker / divider 800 in various states of folding for stowage. The aircraft seat blocker / divider 800 comprises one or more wire spring elements 802, 804 disposed in peripheral edges of a fabric body. The spring elements 802, 804 maintain the fabric body in an upright orientation when in use, and also allow the aircraft seat blocker / divider 800 to be folded for stowage. For example, the aircraft seat blocker / divider 800 may be folded from a deployed configuration (FIG. 8A) to a folded configuration (FIG. 8C).

A device according to the exemplary embodiments described herein is made of textile with spring wire guides that can attach to the center of the aircraft seat and form a seat blocker and passenger divider. It may also be attached to either side of the aircraft seat so that it can function only as a passenger divider. It can be multiple sizes based on available space and seat specifications.

The device may be easily attached to the center, inboard, or outboard side of the aircraft seat and easily movable to other locations. It is light weight, low cost, cleanable and takes up minimal storage space when not in use. Because it is flexible, it will collapse with the seat during impact and therefore not cause a change to the head strike profile. It may be manufactured out of aviation fabric / textile material so will meet flammability requirements. The device does not provide any resistance to seat backrest break forward features.

It is believed that the inventive concepts disclosed herein and many of their attendant advantages will be understood by the foregoing description of embodiments of the inventive concepts disclosed, and it will be apparent that various changes may be made in the form, construction, and arrangement of the components as long as they fall within the scope of the appended claims; and individual features from various embodiments may be combined to arrive at other embodiments. The form herein before described being merely an explanatory embodiment thereof. Furthermore, any of the features disclosed in relation to any of the individual embodiments may be incorporated into any other embodiment, as long as they fall within the scope of the claims.

## Claims

1. An aircraft seat blocker (702) comprising:
a fabric body;
a plurality of armrest engaging elements (706) disposed on opposing surfaces of the fabric body, configured to surround a corresponding armrest and hold the fabric body in an upright orientation;
a spring element (704) disposed along a periphery of the fabric body, configured to apply an expansive force to the fabric body;
a seat back attachment element (208) disposed on the fabric body, the seat back attachment element (208) configured to releasably engage a seat back; and
a seat cushion attachment element (210) disposed on the fabric body, the seat cushion attachment element (210) configured to releasably engage a seat cushion;
wherein the seat back attachment element and seat cushion attachment element are configured to retain the fabric body in an upright orientation when positioned in a middle region of an aircraft seat.

2. The aircraft seat blocker of Claim 1, wherein the seat cushion attachment element (210) comprises a strap configured to surround **the** seat cushion.

3. The aircraft seat blocker of Claim 1 or 2, wherein the seat cushion attachment element (210) comprises one or more upright retention bodies configured to maintain the fabric body in the upright orientation with respect to the seat cushion.

4. The aircraft seat blocker of any preceding Claim, wherein the seat back attachment element (208) comprises a strap configured to surround the seat back

5. The aircraft seat blocker of Claim 4, wherein the seat back attachment element (208) further comprises a midline strap configured to go over the seat back and engage the strap at a posterior portion of the seat back.

6. An aircraft seat divider comprising the aircraft seat blocker of claim 1.

7. The aircraft seat divider of Claim 6, wherein the spring element is configured to allow the aircraft seat divider to fold for storage.

8. The aircraft seat divider of Claim 6, wherein the seat cushion attachment element (210) comprises a strap configured to surround two neighboring seat cushions.

9. The aircraft seat divider of Claim 6, further comprising an inter-seat friction element configured to be placed between neighboring seats and be held in place via friction.

10. The aircraft seat divider of Claim 6, wherein the seat back attachment element (208) comprises a strap configured to surround two neighboring seat backs.

11. The aircraft seat divider of Claim 6, wherein the seat back attachment element (208) is configured to retain the fabric body in the upright orientation between neighboring aircraft seats.

## Patentansprüche

1. Luftfahrzeugsitzblocker (702), umfassend:
einen Stoffkörper;
eine Mehrzahl von Armlehneneingriffselementen (706), die auf gegenüberliegenden Flächen des Stoffkörpers angeordnet sind und dazu ausgelegt sind, eine entsprechende Armlehne zu umschließen und den Stoffkörper in einer aufrechten Ausrichtung zu halten;
ein Federelement (704), das entlang eines Umfangs des Stoffkörpers angeordnet und dazu ausgelegt ist, eine Expansionskraft auf den Stoffkörper auszuüben;
ein Sitzlehnen-Befestigungselement (208), das auf dem Stoffkörper angeordnet ist, wobei das Sitzlehnen-Befestigungselement (208) dazu ausgelegt ist, eine Sitzlehne lösbar in Eingriff zu bringen; und
ein Sitzpolster-Befestigungselement (210), das auf dem Stoffkörper angeordnet ist, wobei das Sitzpolster-Befestigungselement (210) dazu ausgelegt ist, ein Sitzpolster lösbar in Eingriff zu bringen;
wobei das Sitzlehnen-Befestigungselement und das Sitzpolster-Befestigungselement dazu ausgelegt sind, den Stoffkörper in einer aufrechten Ausrichtung zu halten, wenn sie in einem mittleren Bereich eines Luftfahrzeugsitzes positioniert sind.

2. Luftfahrzeugsitzblocker nach Anspruch 1, wobei das Sitzpolster-Befestigungselement (210) ein Band umfasst, das dazu ausgelegt ist, das Sitzpolster zu umschließen.

3. Luftfahrzeugsitzblocker nach Anspruch 1 oder 2, wobei das Sitzpolster-Befestigungselement (210) einen oder mehrere Aufrecht-Haltekörper umfasst, die dazu ausgelegt sind, den Stoffkörper in der aufrechten Ausrichtung in Bezug auf das Sitzpolster zu halten.

4. Luftfahrzeugsitzblocker nach einem der vorhergehenden Ansprüche, wobei das Sitzlehnen-Befestigungselement (208) ein Band umfasst, das dazu ausgelegt ist, die Sitzlehne zu umschließen.

5. Luftfahrzeugsitzblocker nach Anspruch 4, wobei das Sitzlehnen-Befestigungselement (208) ferner ein Mittelband umfasst, das dazu ausgelegt ist, über die Sitzlehne zu verlaufen und das Band an einem hinteren Abschnitt der Sitzlehne in Eingriff zu bringen.

6. Luftfahrzeugsitzteiler, umfassend den Luftfahrzeugsitzblocker nach Anspruch 1.

7. Luftfahrzeugsitzteiler nach Anspruch 6, wobei das Federelement dazu ausgelegt ist, dem Luftfahrzeugsitzteiler zu ermöglichen, zur Aufbewahrung zusammengefaltet zu werden.

8. Luftfahrzeugsitzteiler nach Anspruch 6, wobei das Sitzpolster-Befestigungselement (210) ein Band umfasst, das dazu ausgelegt ist, zwei benachbarte Sitzpolster zu umschließen.

9. Luftfahrzeugsitzteiler nach Anspruch 6, ferner umfassend ein Zwischensitzreibungselement, das dazu ausgelegt ist, zwischen benachbarten Sitzen platziert zu werden und über Reibung an Ort und Stelle gehalten zu werden.

10. Luftfahrzeugsitzteiler nach Anspruch 6, wobei das Sitzlehnen-Befestigungselement (208) ein Band umfasst, das dazu ausgelegt ist, zwei benachbarte Sitzlehnen zu umschließen.

11. Luftfahrzeugsitzteiler nach Anspruch 6, wobei das Sitzlehnen-Befestigungselement (208) dazu ausgelegt ist, den Stoffkörper in der aufrechten Ausrichtung zwischen benachbarten Luftfahrzeugsitzen zu halten.

## Revendications

1. Dispositif de blocage de siège d'aéronef (702) comprenant :
un corps en tissu ;
une pluralité d'éléments d'engagement d'accoudoir (706) disposés sur des surfaces opposées du corps en tissu, configurés pour entourer un accoudoir correspondant et maintenir le corps en tissu dans une orientation verticale ;
un élément ressort (704) disposé le long d'une périphérie du corps en tissu, configuré pour appliquer une force d'expansion au corps en tissu ;
un élément de fixation de dossier de siège (208) disposé sur le corps en tissu, l'élément de fixation de dossier de siège (208) étant configuré pour engager de manière amovible sur un dossier de siège ; et
un élément de fixation de coussin de siège (210) disposé sur le corps en tissu, l'élément de fixation de coussin de siège (210) étant configuré pour engager de manière amovible un coussin de siège ;
dans lequel l'élément de fixation de dossier de siège et l'élément de fixation de coussin de siège sont configurés pour maintenir le corps en tissu en position verticale lorsqu'ils sont positionnés dans une zone centrale d'un siège d'aéronef.

2. Dispositif de blocage de siège d'aéronef selon la revendication 1, dans lequel l'élément de fixation de coussin de siège (210) comprend une sangle configurée pour entourer le coussin de siège.

3. Dispositif de blocage de siège d'aéronef selon la revendication 1 ou 2, dans lequel l'élément de fixation de coussin de siège (210) comprend un ou plusieurs corps de retenue verticaux configurés pour maintenir le corps en tissu dans l'orientation verticale par rapport au coussin de siège.

4. Dispositif de blocage de siège d'aéronef selon l'une quelconque des revendications précédentes, dans lequel l'élément de fixation de dossier de siège (208) comprend une sangle configurée pour entourer le dossier de siège.

5. Dispositif de blocage de siège d'aéronef selon la revendication 4, dans lequel l'élément de fixation de dossier de siège (208) comprend en outre une sangle médiane configurée pour passer sur le dossier de siège et s'engager dans la sangle à une partie postérieure du dossier de siège.

6. Séparateur de siège d'aéronef comprenant le dispositif de blocage de siège d'aéronef selon la revendication 1.

7. Séparateur de siège d'aéronef selon la revendication 6, dans lequel l'élément ressort est configuré pour permettre au séparateur de siège d'aéronef de se replier pour le rangement.

8. Séparateur de siège d'aéronef selon la revendication 6, dans lequel l'élément de fixation de coussin de siège (210) comprend une sangle configurée pour entourer deux coussins de siège adjacents.

9. Séparateur de siège d'aéronef selon la revendication 6, comprenant en outre un élément de friction inter-siège configuré pour être placé entre des sièges adjacents et être maintenu en place par friction.

10. Séparateur de siège d'aéronef selon la revendication 6, dans lequel l'élément de fixation de dossier de siège (208) comprend une sangle configurée pour entourer deux dossiers de siège adjacents.

11. Séparateur de siège d'aéronef selon la revendication 6, dans lequel l'élément de fixation de dossier de siège (208) est configuré pour maintenir le corps en tissu dans l'orientation verticale entre des sièges d'aéronefs adjacents.
